# EUROPEAN PATENT SPECIFICATION

(11) **EP 2 122 740 B1**
(45) Date of publication and mention of the grant of the patent: **10.04.2013**
(21) Application number: 07816992.7
(22) Date of filing: 27.09.2007
(51) Int. Cl.: H01M 2/14, H01M 2/18, H01M 10/0585, H01M 10/0525, H01M 2/16

(54) **STACKED-TYPE LITHIUM ION BATTERY**
LITHIUMIONENBATTERIE DES GESTAPELTEN TYPS
BATTERIE ION-LITHIUM DE TYPE EMPILÉ

(30) Priority: 19.12.2006 CN 200620016294 U
(43) Date of publication of application: 25.11.2009
(73) Proprietor: Byd Company Limited, Shenzhen, Guangdong 518119 (CN)
(72) Inventor: HE, Long, Guangdong 518119 (CN); TANG, Jianhua, Guangdong 518119 (CN); MA, Xiaopeng, Guangdong 518119 (CN)
(74) Representative: HOFFMANN EITLE
(86) International application number: PCT/CN2007/070801
(87) International publication number: WO 2008/074239

(56) References cited:
- WO-A1-2011/077989
- CN-A- 1 610 168
- CN-A- 1 750 295
- JP-A- 05 021 086
- JP-A- 2002 110 132
- JP-A- 2002 329 530
- JP-A- 2003 346 766
- JP-A- 2006 173 095

## Description

### Field of the Invention

The present invention relates to stacked-type lithium ion battery field.

### Background of the Invention

Lithium ion battery has advantages including high specific energy, low self discharge, long cycle life, free of memory effect, and small environmental pollution, etc.; it is a sort of ideal power supply for portable electronic devices and electric vehicles. In lithium ion batteries that are small and don't have high capacity, the core is usually in rolling structure, which is relatively easy to manufacture. However, since high-capacity lithium ion batteries require large heat dissipation area and have higher capacity, the core is usually in stacked structure.

Structurally, a stacked-type lithium ion battery usually comprises positive plate, membrane, and negative plate stacked orderly; in some high-power lithium ion batteries, the plates are wrapped in membrane bag to form positive plate assembly and negative plate assembly, and then the positive plate assembly and negative plate assembly are stacked in sequence. The most commonly used membrane in stacked-type lithium ion battery comprises three membrane layers (polypropylene/polyethylene/polypropylene (PP/PE/PP)) adhered together. Such membrane has advantages including low shut down temperature, high melt down temperature, and high penetration strength, and thereby is widely used in lithium ion battery field.

However, since such membrane is prepared usually through a uniaxial tension process, the membrane has the highest tensile strength in its tensile direction but lower tensile strength in other directions, especially, the tensile strength in the direction perpendicular to the tensile direction is the lowest. As the result, when a stacked-type lithium ion battery with such membrane prepared through uniaxial tension process is used under misuse or extreme conditions, such as dropping, vibration, high temperature storage, pressing or impacting conditions, each side of the core will bear high internal and external pressure; therefore, the membrane in the core will bear high tensile force in all directions.

In such a case, since the membrane can bear high tensile force only in its tensile direction but have lower tensile strength in other directions (e.g., the direction perpendicular to the tensile direction), the membrane will rupture in directions with lower tensile strength and cause electrical contact between the positive plate and the negative plate at the ruptured point and result in short circuit in the battery and degraded battery safety performance.

### Summary of the Invention

The object of the present invention is to provide a stacked-type lithium ion battery, which can prevent membrane rupture and short circuit in the battery, and thereby improves battery safety performance.

The stacked-type lithium ion battery according to the present invention comprises a core, a battery shell, and a cover plate; said core is placed in the battery shell, said cover plate is coupled to the battery shell in a sealed manner; said core comprises a plurality of layers of positive plates, negative plates, and membranes that are stacked together with each other, and the membrane is between the positive plate and the negative plate; wherein at least two membranes are in a 5-175° included angle between their directions of the highest tensile strength.

The present invention has the following benefits: since the tensile directions of the membranes are different, the overall tensile strengths of the battery in all tensile directions are essentially same; therefore, the phenomenon of short circuit in the battery resulted from membrane rupture in lower tensile strength directions can be prevented, and the battery safety performance is greatly enhanced.

### Brief Description of the Drawings

Fig.1 is a schematic view of the tensile directions of the membrane in the prior art;
Fig.2 is a schematic view of the tensile directions of the membrane according to the present invention;
Fig. 3 is a schematic view of a positive plate assembly in the prior art;
Fig.4 is a schematic view of a negative plate assembly in the prior art;
Fig. 5 is a schematic view of the positive plate assembly according to the present invention;
Fig.6 is a schematic view of the negative plate assembly according to the present invention;
Fig.7 is a schematic view of the positive plate assembly according to the present invention;
Fig.8 is a schematic view of the negative plate assembly according to the present invention;

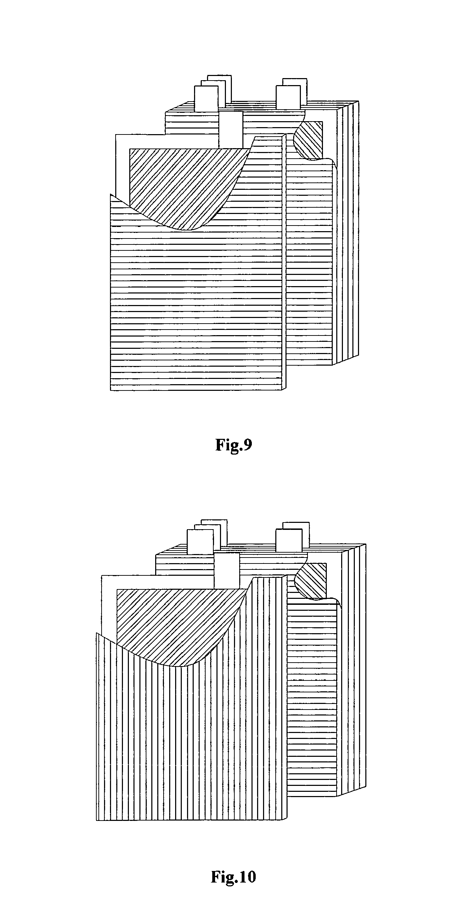

Fig.9 is a schematic view of the positive and negative plate assemblies in stacked state in the prior art;
Fig. 10 is a schematic view of the positive and negative plate assemblies in stacked state according to the present invention;
Fig. 11 is a curve chart of battery voltage and battery temperature and oven temperature during the process the batteries in the prior art are heated to 130 °C oven temperature;
Fig.12 is a curve chart of battery voltage and battery temperature and oven temperature during the process the batteries according to the present invention are heated to 130 °C oven temperature;
Fig.13 is a curve chart of battery voltage and battery temperature and oven temperature during the process the batteries in the prior art are heated to 150°C oven temperature; and
Fig.14 is a curve chart of battery voltage and battery temperature and oven temperature during the process the batteries according to the present invention are heated to 150 °C oven temperature.

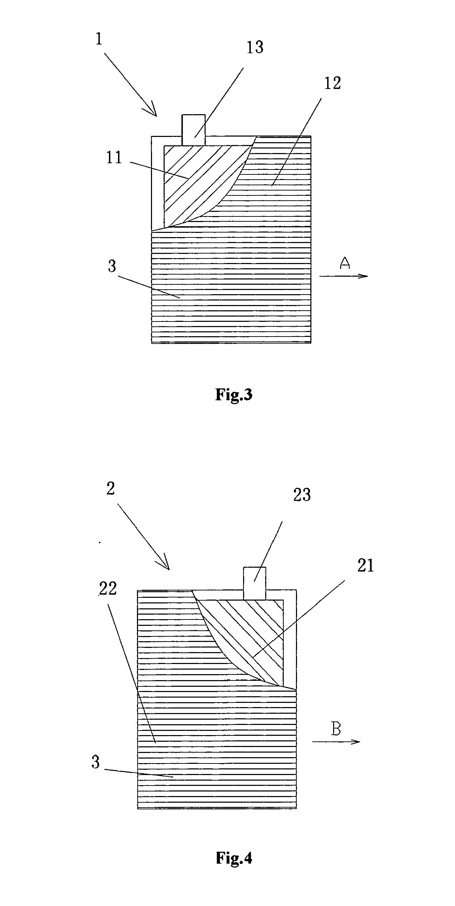

Wherein, the directions indicated by the arrows in Fig.3-Fig.8 are the tensile direction of the membrane. Direction A is the tensile direction of the membrane of the positive plate assembly, while direction B is the tensile direction of the membrane of the negative plate assembly.

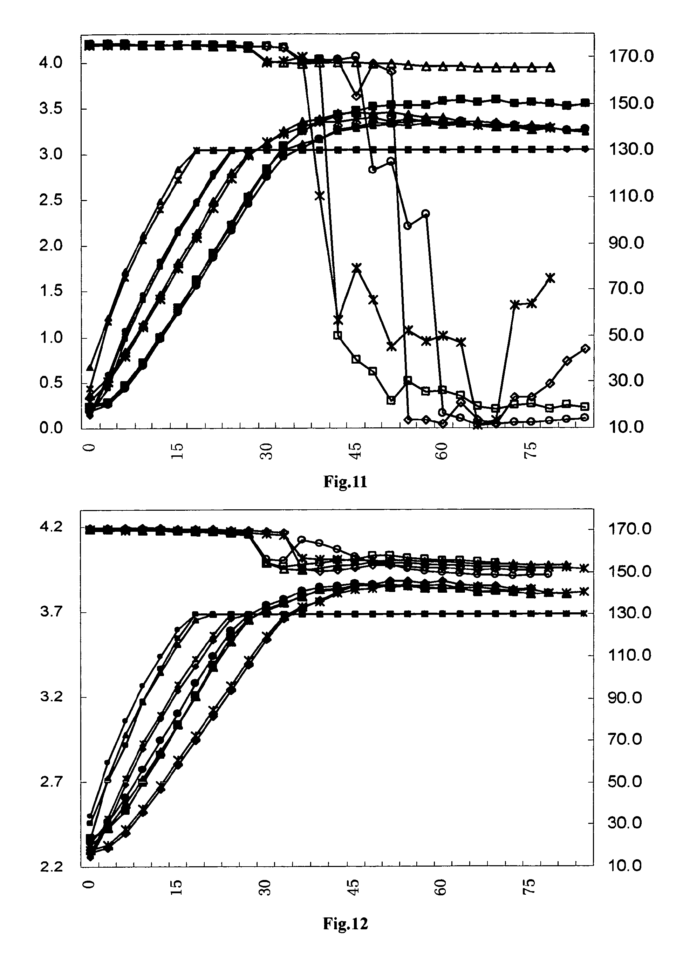

In the curve charts shown in Fig.11-Fig.14, X-axis represents time, in min.; the left Y-axis represents voltage, in volt; the right Y-axis represents temperature, in °C. In addition, each drawing has five voltage curves, five oven temperature curves, and five battery temperature curves, in particularly as follows:
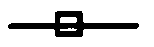 Represent the voltage curve of battery 1;
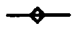 Represent the voltage curve of battery 2;
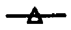 Represent the voltage curve of battery 3;
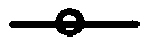 Represent the voltage curve of battery 4;
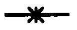 Represent the voltage curve of battery 5;
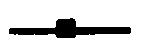 Represent the oven temperature curve of battery 1;
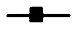 Represent the battery temperature curve of battery 1;
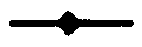 Represent the oven temperature curve of battery 2;
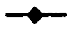 Represent the battery temperature curve of battery 2;
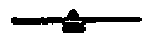 Represent the oven temperature curve of battery 3;
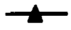 Represent the battery temperature curve of battery 3;
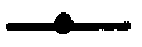 Represent the oven temperature curve of battery 4;
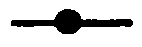 Represent the battery temperature curve of battery 4;
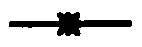 Represent the oven temperature curve of battery 5;
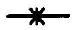 Represent the battery temperature curve of battery 5.

### Detailed Description of the Embodiments

The stacked-type lithium ion battery according to the present invention comprises a core, a battery shell, and a cover plate; wherein said core is placed in said battery shell, said cover plate is coupled to said battery cell in a sealed manner. Said core comprises a plurality of layers of positive plates, negative plates, and membranes stacked together with each other, and the membrane is between the positive plate and the negative plate.

Wherein, at least two membranes are in a 5-175° included angle between their tensile directions. Preferably, the adjacent membranes have a 5-175° included angle between their tensile directions, preferably 60-120°, more preferably 90° included angle.

Preferably two or more membranes are provided between the adjacent positive plate and negative plate. For example, in high power batteries, usually the plates are wrapped with a membrane bag to form a positive plate assembly and a negative plate assembly, and then the positive and negative plate assemblies are stacked orderly. Therefore, preferably, said positive plate is placed in a positive membrane bag composed of two membranes to form a positive plate assembly, with a positive electrode tab protruding from the sealed positive membrane bag and electrically connected to a positive terminal on the cover plate; and said negative plate is placed in a negative membrane bag composed of two membranes to form a negative plate assembly, with a negative electrode tab protruding from the sealed negative membrane bag and electrically connected to a negative terminal on the cover plate.

In such arrangement, there are two membranes between the adjacent positive plate and negative plate; wherein, one membrane is used as the membrane bag for the positive plate, and the other membrane is used as the membrane bag for the negative plate; the two membranes have a 5-175° included angle between their tensile directions, preferably 60-120°, more preferably 90° included angle.

### Embodiment 1

Here, we take the horizontal direction as X-direction and the direction perpendicular to horizontal direction as Y-direction.

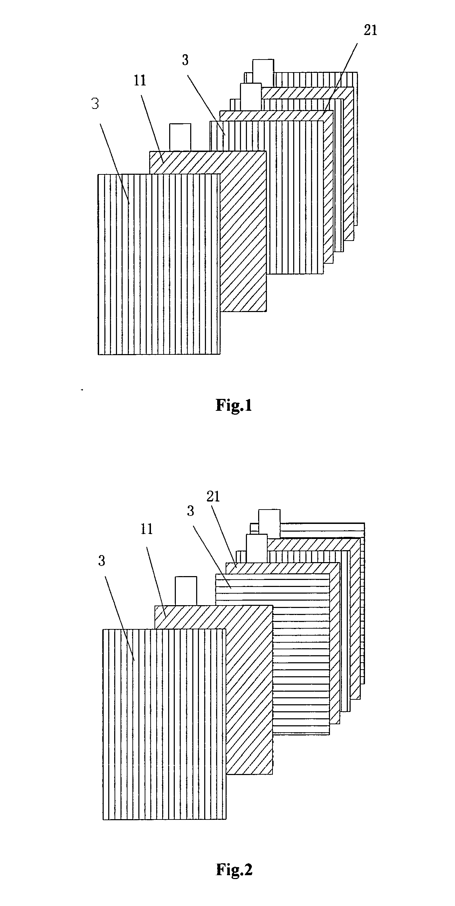

The positive plate 11 and negative plate 21 are obtained by cutting; the positive plate 11 and the negative plate 21 have an uncoated positive electrode tab and negative electrode tab respectively. Then, the membranes prepared through a uniaxial tension process are cut into membranes 3 that are slightly larger than the positive and negative plates, with tensile directions in horizontal direction (X-direction) and vertical direction (Y-direction). As shown in Fig.2, the membranes 3 with tensile directions perpendicular to each other are stacked with the positive and negative plates in sequence to form the battery core, in particularly as follows: membrane 3 with tensile direction in X-direction / positive plate 11/membrane 3 with tensile direction in Y-direction / negative plate 21 / membrane 3 with tensile direction in X-direction / positive plate 11 /.... Next, the battery core is inserted into the battery shell, and the positive and negative electrode tabs are electrically connected to the positive and negative terminals on the cover plate by spot welding respectively. Next, the cover plate is pressed onto the battery shell, and the battery is sealed by ultrasonic welding. Finally, electrolyte is injected into the battery through the injection hole on the cover plate, and then the injection hole is sealed; then, the battery is packed to obtain the finished battery.

### Embodiment 2

The preparation procedures are similar to those for the embodiment 1, with the difference as: there are two membranes 3 between positive plate and negative plate, and the two membranes 3 have different tensile directions; preferably, the two membranes 3 have 90° included angle between their tensile directions.

### Embodiment 3

The membranes 3 are obtained by cutting in X-direction; said membranes 3 are 1-3mm larger than the positive plates 11 in length and width. Then, two membranes 3 of the same size are stacked together, welded on one longer edge and one shorter edge to form a positive membrane bag 12; the positive plate 11 obtained by cutting is placed into the positive membrane bag 12; then, the positive membrane bag 12 is welded on the other longer edge and the other shorter edge, to form the positive plate assembly 1. The negative plate assembly can be prepared through similar procedures as the positive plate assembly, with the only difference that the membranes for fabricating the negative membrane bag 22 are cut in Y-direction.

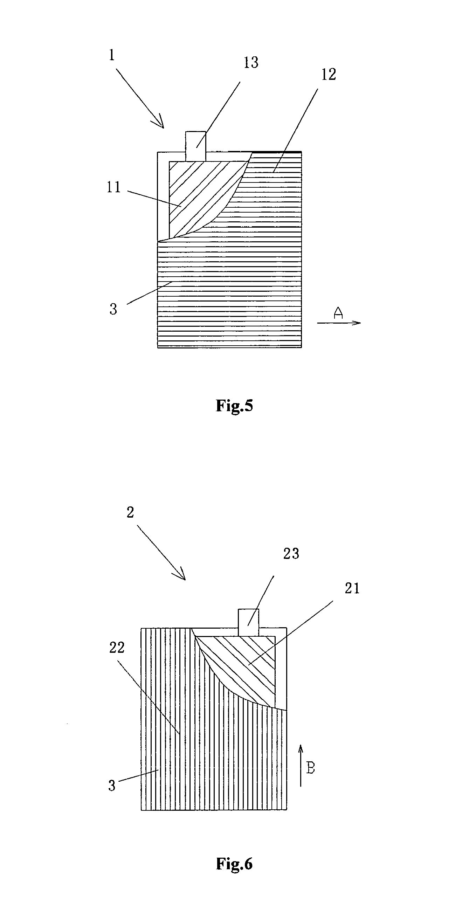

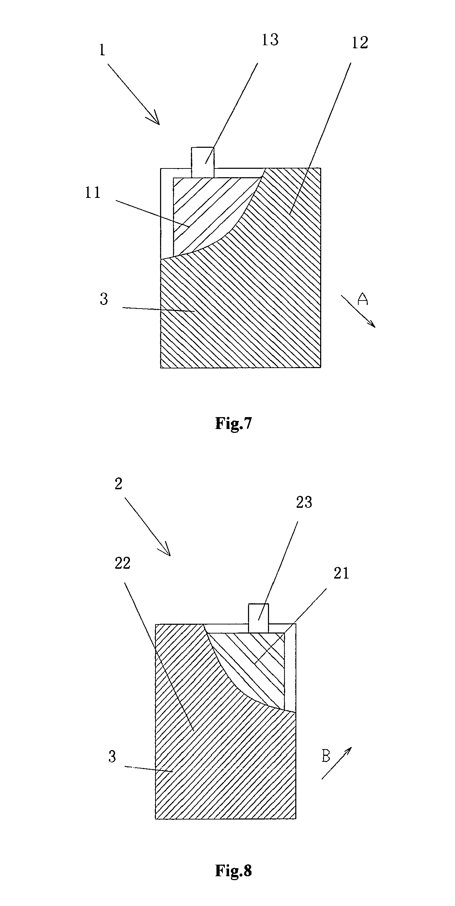

The positive plate assembly 1 and the negative plate assembly 2 are shown in Fig.5-Fig.8; wherein, the positive plate assembly shown in Fig.5 has tensile direction (direction A) in horizontal direction (X-direction), while the negative plate assembly shown in Fig.6 has tensile direction (direction B) in vertical direction (Y-direction); the positive plate assembly shown in Fig.7 has tensile direction (direction A) at -45° to horizontal direction (X-direction), while the negative plate assembly shown in Fig.8 has tensile direction (direction B) at +45° to horizontal direction (X-direction).

Then, the obtained positive and negative plate assemblies 1, 2 are stacked into battery core, with the tensile directions of the two membranes between positive and negative plate perpendicular to each other. Then, the battery core is inserted into the battery shell, the positive electrode tab 13 is electrically connected to the positive terminal on the cover plate, and the negative electrode tab 23 is electrically connected to the negative terminal on the cover plate; then, the cover plate is sealed to the battery shell by ultrasonic welding.

Other contents not mentioned in above embodiments are known to those skilled in the art, and will not be described further here. As long as the tensile directions of the membranes are different and the included angle between the tensile directions is 5-175°, preferably 60-120°, more preferably 90°, any modifications or equivalent substitutions to the present invention shall fall into the protected scope of the present invention, no matter whether the membranes are separated from each other orderly or how many membranes there are with different tensile directions.

### Comparative Embodiment

As shown in Fig.3 and Fig.4, the positive plate assembly 1 and negative plate assembly 2 are fabricated, with the membrane for the positive plate assembly 1 and the membrane for the negative plate assembly 2 in the same tensile direction. Other procedures are identical to those used in embodiment 3.

### Test

10 finished batteries according to the present invention are produced with the method used in embodiment 3, and 10 finished batteries according to the prior art are produced with the method used in the comparative embodiment. The batteries are tested at 130°C and 150 °C oven temperature, respectively.

### 1. Test at 130°C oven temperature

Take 5 finished batteries according to the present invention and 5 finished batteries according to the prior art; in order to prevent adverse effect to the test result due to mutual interference between the batteries or battery explosion, test one battery at 130°C oven temperature every time. Charge the battery to 4.20V at 1.0C and 0.02C cut-off current at 25±2° C temperature, leave the battery for 10 minutes; then, place the battery into an oven and heat it at 5°C /min heating rate. During the heating process, record the oven temperature, battery temperature, and battery voltage, and work out oven temperature curve, battery temperature curve, and battery voltage curve. When the oven temperature reaches to 130 °C , observe the battery state, and record battery surface temperature and endurance time. If the battery can keep 130°C for 1h or above without any abnormality such as explosion or fire, it is deemed that the battery has passed the test. The test result is shown in Table 1 and Fig.11 and Fig.12.

**Table 1 Result of Test at 130°C oven temperature**

| Battery No. | Prior Art | | | Present Invention | | |
|---|---|---|---|---|---|---|
| | Maximum surface temperature of battery (°C) | Phenomena in the process | Pass | Maximum surface temperature of battery (°C) | Phenomena in the process | Pass |
| 1 | 152.1 | Battery swells | Y | 144.2 | Battery swells | Y |
| 2 | 142 | Battery swells | Y | 146.1 | Battery swells | Y |
| 3 | 146.5 | Battery swells | Y | 144.3 | Battery swells | Y |
| 4 | 142.8 | Battery swells | Y | 144.9 | Battery swells | Y |
| 5 | 144.1 | Battery swells | Y | 144.2 | Battery swells | Y |

It is seen from Table 1: all of the batteries according to the prior art and to the present invention passed the test at 130 °C oven temperature; however, as shown in Fig.11, 4 of the 5 batteries according to the prior art have voltage dropped to about 0 volt, which indicates short circuit has happened in them; whereas all of the 5 batteries according to the present invention, as shown in Fig.12, have voltage maintaining above 4 volt and stable battery temperature, which indicates there is no short circuit in the batteries and the voltage is normal during the test at 130 °C oven temperature. The result proves the membranes in the batteries according to the present invention have higher tensile strength and didn't rupture, and thereby can prevent contact between the positive and negative plates. It is obvious that the batteries produced with the technical solution of the present invention have higher safety performance.

### 2. Test at 150 °C oven temperature

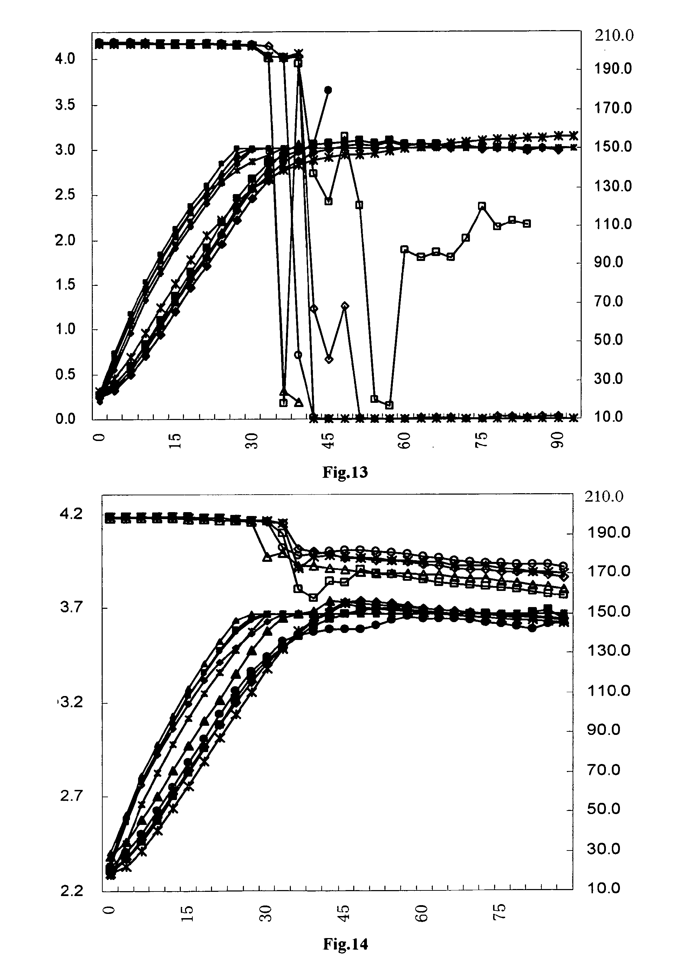

Take the remaining 5 batteries according to the prior art and 5 batteries according to the present invention, and test them at 150 °C oven temperature. Charge the battery to 4.20V at 1.0C and 0.02C cut-off current at 25±2° C temperature, leave the battery for 10 minutes; then, place the battery into an oven and heat it at 5°C/min heating rate. During the heating process, record the oven temperature, battery temperature, and battery voltage, and work out oven temperature curve, battery temperature curve, and battery voltage curve. When the oven temperature reaches to 150°C, observe the battery state, and record battery surface temperature and endurance time. If the battery can keep 150°C for 1h or above without any abnormality such as explosion or fire, it is deemed that the battery has passed the test. The test result is shown in Table 2, Fig.13, and Fig. 14.

**Table 2 Result of Test at 150°C Oven Temperature**

| Battery No. | Prior Art | | | Present Invention | | |
|---|---|---|---|---|---|---|
| | Maximum surface temperature of battery (°C) | Phenomena in the process | Pass | Maximum surface temperature of battery (°C) | Phenomena in the process | Pass |
| 1 | 198.5 | Battery explodes | N | 152.8 | Battery swells | Y |
| 2 | 235.1 | Battery explodes | N | 156.8 | Battery swells | Y |
| 3 | 173.6 | Battery explodes | N | 156.7 | Battery swells | Y |
| 4 | 180 | Battery explodes | N | 148.6 | Battery swells | Y |
| 5 | 196.8 | Battery explodes | N | 154.7 | Battery swells | Y |

As shown in Table 2, all of the 5 batteries according to the prior art exploded, while the batteries according to the present invention only swelled. Please see Fig.13, all of the 5 batteries according to the prior art have voltage dropped to about 0 volt; however, as shown in Fig.14, all of the 5 batteries according to the present invention have voltage maintaining above 3.7 volt, which indicates there is no short circuit in the batteries according to the present invention.

Viewed from above safety test results, the membranes in the batteries according to the present invention have higher tensile strength, and thereby can effective prevent short circuit in the batteries under misuse or extreme conditions.

## Claims

1. A stacked-type lithium ion battery, comprising a core, a battery shell, and a cover plate; wherein said core is placed in the battery shell, said cover plate is coupled to the battery shell in a sealed manner; said core comprises a plurality of layers of positive plates (11), negative plates (21), and membranes (3) that are stacked together with each other, and the membrane is between the positive plate and the negative plate; **characterized in that**, at least two membranes are in a 5-175° included angle between their directions of the highest tensile strength.

2. The stacked-type lithium ion battery as claimed in claim 1, wherein the adjacent two membranes have a 5-175° included angle between their directions of the highest tensile strength.

3. The stacked-type lithium ion battery as claimed in claim 2, wherein the adjacent two membranes have a 60-120° included angle between their directions of the highest tensile strength.

4. The stacked-type lithium ion battery as claimed in claim 1, wherein two or more membranes are provided between the adjacent positive plate and negative plate.

5. The stacked-type lithium ion battery as claimed in claim 4, wherein said positive plate is placed in a positive membrane bag composed of two membranes to form a positive plate assembly, with a positive electrode tab protruding from the sealed positive membrane bag and electrically connected to a positive terminal on the cover plate; and said negative plate is placed in a negative membrane bag composed of two membranes to form a negative plate assembly, with a negative electrode tab protruding from the sealed negative membrane bag and electrically connected to a negative terminal on the cover plate.

6. The stacked-type lithium ion battery as claimed in claim 5, wherein the two membranes between the adjacent positive plate and negative plate have a 5-175° included angle between their directions of the highest tensile strength.

7. The stacked-type lithium ion battery as claimed in claim 6, wherein said included angle is 90°.

## Patentansprüche

1. Lithiumionenbatterie des gestapelten Typs, mit einem Kern, einer Batteriehülle, und einer Abdeckplatte; wobei der Kern in der Batteriehülle platziert ist, die Abdeckplatte mit der Batteriehülle in einer abdichtenden Weise gekoppelt ist; der Kern eine Vielzahl an Schichten und positiven Platten (11), negativen Platten (21), und Membranen (3) aufweist, die miteinander gestapelt sind, und die Membran zwischen der positiven Platte und der negativen Platte angeordnet ist; **dadurch gekennzeichnet, dass** mindestens zwei Membranen mit einem eingeschlossenen Winkel von 5-175° zwischen ihren Richtungen der höchsten Zugfestigkeit angeordnet sind.

2. Lithiumionenbatterie des gestapelten Typs nach Anspruch 1, bei der die zwei benachbarten Membranen einen Winkel von 5-175° zwischen ihren Richtungen der höchsten Zugfestigkeit einschließen.

3. Lithiumionenbatterie des gestapelten Typs nach Anspruch 2, bei der die zwei benachbarten Membranen einem Winkel von 60-120° zwischen ihren Richtungen der höchsten Zugfestigkeit einschließen.

4. Lithiumionenbatterie des gestapelten Typs nach Anspruch 1, bei der zwei oder mehr Membranen zwischen der benachbarten positiven Platte und negativen Platte vorgesehen sind.

5. Lithiumionenbatterie des gestapelten Typs nach Anspruch 4, bei der die positive Platte in einer positiven Membrantasche platziert ist, die aus zwei Membranen aufgebaut ist, um eine positive Plattenanordnung zu bilden, mit einer positiven Elektrodenzunge, die aus der abgedichteten positiven Membrantasche hervorsteht, und mit einem Pluspol auf der Abdeckplatte elektrisch verbunden ist; und die negative Platte in einer negativen Membrantasche platziert ist, die aus zwei Membranen besteht, um eine negative Plattenanordnung zu bilden, mit einer negativen Elektrodenzunge, die aus der abgedichteten negativen Membrantasche hervorsteht, und mit einem Negativpol auf der Abdeckplatte elektrisch verbunden ist.

6. Lithiumionenbatterie des gestapelten Typs nach Anspruch 5, bei der die beiden Membranen zwischen der benachbarten positiven Platte und negativen Platte einen Winkel von 5-175° zwischen ihren Richtungen der höchsten Zugfestigkeit einschließen.

7. Lithiumionenbatterie des gestapelten Typs nach Anspruch 6, bei der der eingeschlossene Winkel 90° beträgt.

## Revendications

1. Batterie au lithium-ion de type empilé, comprenant un noyau, une coque de batterie, et une plaque de couverture ; dans laquelle ledit noyau est placé dans la coque de batterie, ladite plaque de couverture est couplée à la coque de batterie de manière étanche ; ledit noyau comprend une pluralité de couches de plaques positives (11), de plaques négatives (21), et de membranes (3) qui sont empilées ensemble l'une avec l'autre, et la membrane est comprise entre la plaque positive et la plaque négative ; **caractérisée en ce que**, au moins deux membranes forment un angle d'ouverture de 5 à 175° entre leurs directions de la plus haute résistance à la traction.

2. Batterie au lithium-ion de type empilé selon la revendication 1, dans laquelle les deux membranes adjacentes forment un angle d'ouverture de 5 à 175° entre leurs directions de la plus haute résistance à la traction.

3. Batterie au lithium-ion de type empilé selon la revendication 2, dans laquelle les deux membranes adjacentes forment un angle d'ouverture de 60 à 120° entre leurs directions de la plus haute résistance à la traction.

4. Batterie au lithium-ion de type empilé selon la revendication 1, dans laquelle deux ou plusieurs membranes sont prévues entre la plaque positive et la plaque négative adjacentes.

5. Batterie au lithium-ion de type empilé selon la revendication 4, dans laquelle ladite plaque positive est placée dans une poche de membrane positive composée de deux membranes pour former un ensemble de plaques positives, avec une languette d'électrode positive faisant saillie de la poche de membrane positive étanche et électriquement reliée à une borne positive sur la plaque de couverture ; et ladite plaque négative est placée dans une poche de membrane négative composée de deux membranes pour former un ensemble de plaques négatives, avec une languette d'électrode négative faisant saillie de la poche de membrane négative étanche et électriquement reliée à une borne négative sur la plaque de couverture.

6. Batterie au lithium-ion de type empilé selon la revendication 5, dans laquelle les deux membranes entre la plaque positive et la plaque négative adjacentes forment un angle d'ouverture de 5 à 175° entre leurs directions de la plus haute résistance à la traction.

7. Batterie au lithium-ion de type empilé selon la revendication 6, dans laquelle ledit angle d'ouverture est de 90°.
